(19) Europäisches Patentamt

European Patent Office

Office européen des brevets

(11) Publication number: **0 439 107 A1**

# EUROPEAN PATENT APPLICATION

(21) Application number: **91100730.0**

(51) Int. Cl.⁵: **C09D 5/36, B05D 5/06**

(22) Date of filing: **22.01.91**

(30) Priority: **22.01.90 US 467906**
**30.11.90 US 622207**

(43) Date of publication of application:
**31.07.91 Bulletin 91/31**

(84) Designated Contracting States:
**AT BE CH DE DK ES FR GB GR IT LI LU NL SE**

(71) Applicant: **BASF Corporation**
**Inmont Division, 1255 Broad Street, P.O. Box 6001**
**Clifton, New Jersey 07015-6001(US)**

(72) Inventor: **Panush, Sol**
**28670 Oak Crest Drive**
**Farmington Hills, Michigan 48018(US)**
Inventor: **Gelmini, James M.**
**32435 Revere Drive**
**Warren, Michigan 48092(US)**
Inventor: **Bradey, Nancy B.**
**3686 Oakleaf Drive**
**West Bloomfield, Michigan 48003(US)**

(74) Representative: **Leifert, Elmar, Dr.**
**BASF Lacke + Farben AG Patentabteilung**
**Max-Winkelmann-Strasse 80 Postfach 61 23**
**W-4400 Münster(DE)**

(54) **Laminar graphite containing pigment composition.**

(57) A pigment blend containing laminar graphite, a substantially transparent organic pigment and a metallic or metal-like pigment is described. The laminar graphite, in contrast to other conventional black pigments, causes a hue shift while retaining the richness of color, to achieve a soft-silky-smokey ("spooky") effect.

EP 0 439 107 A1

# LAMINAR GPAPHITE CONTAINING PIGMENT COMPOSITION

This invention relates generally to pigment compositions, processes of making laminar graphite-containing pigment compositions, coating compositions containing laminar graphite and articles coated with a coating composition containing a laminar graphite. More specifically, the pigment compositions described herein are useful for coating substrates, and in particular, autobody parts in the form of one-coat or multi-coat systems.

Background of the Invention

Automotive coating compositions exhibiting a metallic appearance are well known in the coatings art. The metallic appearance can be produced by using a metallic pigment such as metal flake in the coating composition. A metallic appearance can also be produced by the inclusion of metallic-like pigments such as metal oxide coated mica in the coating composition, as disclosed in U.S. Pat. Nos. 4,499,143, 4,605,687, and 4,598,015, which are incorporated by reference.

Metal flakes or mica particles tend to shift the hue of ordinary colored pigments. These pigment additives enhance the color of ordinary pigments, adding depth, clarity, and chromaticity, and produce a highly desirable appearance. The metal flakes or mica particles may be in the same coating layer as the colored pigments or in different layers.

Ordinary opaque pigments hide the effect of metal or mica particles. Therefore, when the metal flakes are in the same coating layer as the colored pigments, substantially transparent pigments may be used. The combination of metal/mica and transparent pigment can be formulated to have sufficient hiding power (opacity) to prevent light penetration to the metal or primer underneath, to be durable and to be attractive. As a rule of thumb, the pigment/binder ratio in an automotive paint may be about 0.35 or less. Higher amounts of pigment tend to decrease the durability of the coating.

It has been particularly difficult in the past to shift the hue of pigment blends without darkening or overpowering the color of the pigment. This is true in particular with respect to highly transparent organic pigments and pearlescent pigments, such as described in U.S. Patent No. 4,551,491.

Numerous attempts have been made to shift the hue of transparent pigments using different opaque modifying pigments without success. For example conventional opaque black pigments tend to overpower the other pigments, causing the color to appear darker than desired.

Carbon blacks such as furnace, thermal, channel and lake blacks, either beaded or fluff, act as strong tinters which achieve excellent hiding and exposure durability. They also provide excellent moisture resistance and in some instances, excellent jetness. However, carbon blacks tend to have a yellow to blue undertone and are insoluble.

Numerous black dyes of the powder metal-organic complex type have also been considered. These soluble dyes which exhibit a blue to violet undertone. While they tend to exhibit excellent jetness, they tend to act as moderate tinters, providing weak to moderate hiding; also, they exhibit limited durability and only moderate resistance to moisture.

The powder perylene pigments tend to act as moderate tinters with a green undertone. Although they exhibit good moisture resistance, they provide only weak to moderate hiding, are generally not durable, are insoluble, exhibit poor jetness and are costly.

Bone black powders exhibit a brown undertone and are generally durable; they offer only marginal resistance to moisture and provide poor jetness. They are insoluble, are considered generally poor tinters and provide poor hideability.

Black mineral coloring agents having a brown undertone, such as ferrous oxide powder, are poor tinters. They provide moderate to good hiding with good durability, but only borderline moisture resistance. Also, they exhibit poor jetness and are insoluble.

Aniline powder pigments are generally weak tinters with a brown undertone. They have poor jetness, only moderate hiding ability and moisture resistance. They are insoluble. Their durability is unacceptable.

The mica type pigments, such as ferric oxide coated mica flakes, are moderate tinters with red/blue undertones and with moderate hiding ability. Although they have excellent durability and moisture resistance, they exhibit poor jetness and are insoluble. The ferric oxide coated mica pigments are also magnetic.

None of these pigments effectively modifies the color without reducing the chromaticity. Rather, each of these conventional black pigments tends to overpower the other pigments, simply making the compositions darker, if not entirely black.

## SUMMARY OF THE INVENTION

It has been found, surprisingly, that durable pigment compositions with adequate hiding power can be prepared consisting of a metal or mica, a transparent pigment and laminar graphite. Surprisingly, in coating compositions of less than about 0.35 p/b, an effective amount of laminar graphite can be introduced such that the compositions have adequate hiding power, and in which the laminar graphite modifies the color of transparent pigments without reducing the chromaticity, as is observed with other opaque black pigments. At the same time, the laminar graphite creates a soft/silky/smokey ("spooky") effect. This soft/silky/smokey effect is not observed with the conventional black coloring agents described above, although some of those pigment ingredients may be used in conjunction with laminar graphite, such as when a dark gray or coffee color composition is desired. Examples of the use of numerous combined pigments are provided below.

Laminar graphite also modifies the metallic color effect produced by metallic or pearlescent pigments giving an antique metallic color effect. The soft/silky/smokey and antique effects are unexpected in that the initial color of the other pigments contained in the blend are essentially retained but with the addition of novel highlights and unique color travel effects.

Laminar graphite as the term is used herein refers to a flake shaped black pigment, having an average particle size of about 3.5 microns. It is typically odorless, tasteless, nontoxic, chemically inert to acid or alkali, and able to withstand temperatures as high as about 5400'F. One commercial form of laminar graphite is Graphitan (TM), sold by Ciba-Geigy Corporation.

Laminar graphite is primarily used in electrodes. For example, U.S. patent 4,035,265 describes a laminar graphite containing electrically conductive paint composition which can be painted on electrodes or another surface to be made conductive. The laminar graphite functions to reduce the resistivity of the paint.

One aspect of the invention involves a coating composition containing a transparent organic pigment and a pearlescent or metallic pigment in combination with laminar graphite, present in an amount effective for producing a soft-silky-smokey hue shift and an antique metallic color.

Another aspect of the invention involves a two-coat system consisting of a basecoat containing a transparent organic pigment and a pearlescent or metallic pigment in combination with laminar graphite present in an amount effective for producing a soft-silky-smokey hue shift and an antique metallic color, and a transparent topcoat.

Another aspect of the invention is a substrate coated with a coating composition described above.

## DETAILED DESCRIPTION

The following terms are used throughout the specification and in the appended claims, and have the meaning set forth below, as will be understood by those skilled in the art:

hue:

the color appearance of a pigment, based upon its overall light wavelength distribution, such as described in the IES Lighting Handbook (1981), pp. 5-1 to 5-13. The first dimension in color space.

value:

lightness or darkness of a color; also referred to as "saturation." The second dimension in color space.

chromaticity:

the third axis in color space: hue (red, blue, yellow), value( light to dark),and chroma (vivid to dull). Hue, value, and chromaticity are used to define a color.

hue shift:

a change in the light wavelength distribution realized when laminar graphite is added to an essentially transparent organic pigment and a pearlescent pigment with or without the presence of metals.

face:

the color effect visible perpendicular to the viewing surface.

3

flash:

the color effect visible at about a 45 degree angle to the viewing surface.

flop:

the color effect visible on a angle almost parallel to the viewing surface.

travel (color travel):

difference in color observed at different viewing angles.

spooky:

the soft-silky-smokey effect achieved; use of laminar graphite provides a white-spooky effect.

undertone:

the color observed when viewing an object at an angle which is different from the color observed when viewing perpendicular to the object.

antique effect:

a hue with slight grayness exhibited by combinations of metals and laminar graphite.

p/b:

pigment to binder ratio (w/w).

Any substrate material can be coated with the coating compositions according to the present invention, including but not limited to glass, ceramics, paper, wood and plastic material, depending on the specific drying and/or curing requirements of the particular composition. The coating system of the present invention is particularly useful for coating metal substrates, and specifically as an automotive paint finish system. The substrate may also be bare substrate material or can be conventionally primed, for example to impart corrosion resistance. Examples of such metal substrates include steel, aluminum, copper, magnesium, and alloys thereof.

The components of the composition can be varied to suit the temperature tolerance of the substrate material. For example, the components can be so constituted for air drying (i.e., ambient, low temperature cure (e.g., 150° F.-180° F.), or high temperature cure, e.g., over 180° F.).

Automobile coatings are typically applied as either one-coat or multi-coat systems. Multicoat coating compositions comprising a pigmented basecoat and at least one clear topcoat are described in, for example, U.S. Pat. Nos. 4,705,839 and 4,791,168. The use of a basecoat-clear topcoat multicoat coating system results in an improved aesthetic appearance, along with improved resistance to weathering and damage. Multicoat systems useful as automotive paints are described, for example, in U.S. Patents 4,499,143 and 4,598,015

In the one-coat system, no clear coat or top coat is typically applied. This more economical process is most useful on trucks, buses and fleet car body parts.

The coating compositions of the present invention can be used, for example as pigmented topcoats, as single coat systems or as the basecoat of pigmented basecoat/clear topcoat (multicoat) coating compositions. It is preferred to use the present invention as the pigment in a pigmented basecoat overcoated by a clear topcoat. Although the pigmented basecoat/clear topcoat multicoat coating is preferred, it will be appreciated that the coatings described herein can have utility as pigmented topcoats, and, pigmented coatings in general.

Examples of suitable binder resins for these pigments include acrylic, urethane, or polyester/polyurethane binders as disclosed in U.S. Patents 4,487,869, 3,050,412, 3,198,759, 3,232,903, 3,255,135, 4,720,528, 4,705,839 , 4,600,737, 4,423,179, 4,341,678, 4,318,833, 4,317,895, 4,794,147 and 4,791,168.

In the multicoat systems described herein, a pigmented basecoat composition may be applied to a substrate to protect the substrate surface, to hide blemishes and provide an aesthetically pleasing color, followed by application of an unpigmented layer of a polymer which imparts a deep color appearance to the basecoat and durability to the pigmented basecoat. Other coating layers may then be applied if desired. Aesthetic quality is generally determined by the pigments in the basecoat, which may be considered a high solids content basecoat.

This high solids nonmetallic (metal free) basecoat is carefully designed for value (degree of darkness) and hue (undertone color). To produce the optimum in opalescence, the color value of the basecoat may correspond to specific values (N-4 to N-8) on the Munsell color chart. Preferably, this value is N-5 to N-8 on the Munsell color chart, and most preferably the Munsell value is N-7.

The Munsell scale of value exhibits ten visually equal steps ranging between black (N-0) and white (N-10), the intermediate chips being dark to light grays. The Munsell value of a color is the same as that of the gray sample in the same row of the constant hue charts. Thus, in a red having the designation 5R 7/3, the "7" indicates the value which is equal to the gray N-7.

The color imparted to the basecoat may be coordinated with subsequently applied coating materials to enhance the opalescent color effect. Pigmentation may be added to the polymer binder in amounts which are effective for producing an N-4 to N-8 Munsell color value. The hue of this basecoat can vary from yellow to blue within the N-4 to N-8 Munsell value range, and may be adjusted for a color value away from gray to achieve a desired color sensation. The yellow to blue hue within this N-4 to N-8 value range can be produced using any conventional pigmentation known to produce such a color effect. Typically, the coloration is provided to the basecoat utilizing various combinations of transparent organic or inorganic pigments.

Each of the above-recited polymers may be used as the topcoat, as long as it provides a substantially transparent film through which the basecoat can be seen. It is preferred that the transparent film be substantially colorless so that the full polychromatic and aesthetic effect of the basecoat is not substantially decreased. However, in some instances, desirable and unique styling effects can be obtained by the addition of contrast or complementary colors to the topcoat. Another outstanding feature of the topcoat is the significant improvement in the durability which is provided to the overall coating composition.

It is preferred to utilize the compositions of the present invention in a pigmented basecoat, clear topcoat, (multicoat) system which offers a means of combining the desirable properties of a combination of resin systems. For example, in automotive finishes, the pigment control properties of polyurethane binders can be combined with the chemical resistance properties of a thermosetting acrylic clearcoat applied over a pigmented thermoplastic polyurethane-containing basecoat. Likewise, in appliance finishes, the chemical resistance of polyester resins can be combined with the lower cost of thermosetting acrylic resins by applying a polyester clear topcoat over a pigmented thermosetting acrylic basecoat. Although any of the above-mentioned thermoplastic materials may be used to form the transparent topcoat, better durability is achieved if the topcoat is one of the above-cited thermosetting materials, i.e., the materials containing the cross-linking agents.

Even though it is preferred to use the coating compositions of the present invention as a pigmented basecoat overcoated with a clear topcoat, these compositions may also be used as pigmented topcoats, and will exhibit opalescence which results in more natural hues, softer colors and minimal color travel. Any of the previously mentioned polymers contained in the system for basecoats or clear topcoats may be used to form pigmented topcoats of the present invention.

The essential clear topcoat may serve to magnify any imperfections and highlight any color deficiencies in the basecoat. Hence, it is important to have a uniform pigment dispersion in the basecoat, and to achieve uniform application of the basecoat on the substrate. The clear topcoat may also act as an ultraviolet magnifier, which can accelerate rather than retard ultraviolet light degradation of the pigment. Hence U.V. absorbing agents may be included as described below.

Many of the coating systems described herein include metal particles in the basecoat to impart a metallic appearance to the substrate. By using a laminar graphite material as described herein in combination with metallic pigment particles, a spooky effect, a hue shift and an antique look are unexpectedly achieved as described above.

Pearlescent pigments with or without conventional pigments are also suitable for use with the laminar graphite described herein to achieve the spooky antique effect. Pearlescent pigments may typically be considered whenever metal pigments particles are not desired in the basecoat. Occasionally, pearlescent pigments are associated with problems such as moisture, sensitivity, particle size variation, travel (face to flop), application control, sensitivity to sunlight, subtractive color effects and quality control problems. Inclusion of a laminar graphite achieves the desired spooky effect and may reduce the problems experienced with these pearlescent pigments.

The laminar graphite included herein is introduced into an automotive (O.E.M.) enamel in an amount effective for producing a spooky effect. The hue shifts to an antique metallic color, while retaining the initial true color of the pigment composition. Conventional black pigments (e.g., carbons, dyes, perylenes, bone, mineral, aniline or mica) tend to dominate the colored pigments with which they are blended, producing color travel (face to flop) and hues that are antagonistic to the original color.

The laminar graphite may comprise from about 1% to about 99% of the total pigment blend in a one coat composition.

Mica may be incorporated into the pigment composition in coated or uncoated form. It may be present in the pigment composition up to as high as about 99 percent of the pigment, but typically is present in an amount ranging from about 0.5 to about 60 percent, and preferably is present in an amount ranging from about 1 to 40 percent.

Aluminum may also be present in the pigment composition. When aluminum is present, it may also comprise up to about 99 percent of the pigment. It typically is present in an amount ranging from about 0.1 to about 50 percent, and preferably about 0.1 to about 20 percent when desired.

In multicoat systems, the pigments are typically incorporated into the basecoat as described above. The laminar graphite level again ranges from about 1 to about 99% of the pigment blend.

When mica is present in the multicoat system, it may be in coated or uncoated form, and again may comprise up to about 99 percent of the weight of the pigment. Preferably, the level of mica is not greater than about 90% of the pigment blend, and the most preferred level of mica is about 3 to 70 percent of the weight of the pigment blend in a multicoat system.

The p/b ratio can be any ratio which will provide the requisite hiding and not exceed the durability limitation. Suitable p/b ratios generally range from about 0.04 to about 0.35. However, the actual p/b ratio will be dependent on the color and the precise pigment composition selected.

Any organic substantially transparent pigments and pearlescent pigments may be included which provide a hue shift when blended with laminar graphite. Examples of organic substantially transparent pigments which are useful herein include phthalocyanine blues and greens, perylenes, quinacridones, imidazoles, isoindolinones, irgazines, isoindolines, benzimidazolones, indanthrenes and carbazoles.

Examples of useful pearlescent pigments are described in U.S. Patent No. 4,551,491, the teachings of which are incorporated herein by reference.

Other pigments which are useful for achieving a spooky effect include inorganic transparent red, yellow and orange iron oxides, micro titanium dioxides, pearls (uncoated, ferric oxide and/or titanium dioxide coated) and the like.

The laminar graphite and other pigments may be blended or dispersed in the manner most suitable for developing the aesthetically acceptable pigment at suitable cost, in the desired quantity and at the appropriate level of stability. The blending method should minimize any particle size reduction, since the laminar shape of the graphite is useful for developing the spooky effect. Examples of such dispersion methods include high speed Cowles, low shear dispersion and high sheer dispersion. The preferred mixing method is high sheer dispersion.

When the laminar graphite is prepared for usage in enamels by high speed Cowles, a slurry of pigments is formed in a suitable solvent and stabilized with a resin and/or with melamine. The Cowles slurry is preferred to develop optimum color and transparency, with weak tint strength. Flocculation tends to occur.

When low sheer dispersion is used to prepare the laminar graphite, a grinder, such as a vertical sand grinder may be used. The sand grinder also typically utilizes a solvent and a vehicle, such as a resin and/or melamine. Low sheer dispersion tends to reduce color and transparency, improve tint strength, reduce flocculation and reduce the cost.

High sheer dispersion may be accomplished in an attritor again using a vehicle such as resin and/or melamine and a solvent. High sheer dispersion provides the weakest color and transparency but optimizes tint strength, eliminates flocculation and reduces dispersion costs.

Alternatively, a steel ball mill can be used in conjunction with the vehicle and solvent as previously described.

By blending laminar graphite with an essentially transparent organic pigment and/or a pearlescent pigment, and by incorporating this pigment blend into a basecoat or single coat operation novel and unexpected hue shifts occur while retaining the initial true color of the pigment composition; an antique effect may also be realized when desired, using metal particles and/or pearlescent pigments. This is in comparison to conventional black pigments, which dominate the colored pigments with which they are blended, and in effect produce travel and undertones (hues) that are antagonistic to the original color.

The following formulations are intended to exemplify certain preferred embodiments of the invention. All ingredients are listed as parts in weight percentages (w/w) based on the total weight of the pigment blend.

The ingredients are blended/dispersed in accordance with the general teachings above.

## EXAMPLE 1 (Lilac)

| Parts | Ingredients |
|-------|-------------|
| 72.72 | Blue mica No. 9-225 (E.M. Chemicals) |
| 23.27 | Laminar graphite (Ciba-Geigy, Graphitan #7525) |
| 1.31 | Violet 2R (Sandoz) |
| 2.70 | Aluminum, Silberline |
| 100.00 | |

p/b = 0.149
face = smokey gray blue
flash = rich lilac
flop = smokey violet

## EXAMPLE 2 (Royal Grape)

| Parts | Ingredients |
|-------|-------------|
| 72.96 | Red Mica 9-507 (E.M. Chemicals) |
| 2.35 | Violet 2R (Sandoz) |
| 7.51 | Phthalo Green GF349 (Sanyo) |
| 5.92 | Laminar graphite (1) |
| 11.26 | Micro TiO2 (MT 100S Tayco) |
| 100.00 | |

p/b = 0.149
face = smokey red blue
flash = rich purple
flop = smokey purple

## EXAMPLE 3 (Deep Sea)

| Parts | Ingredients |
|---|---|
| 75.88 | Blue Mica (9-225, E.M. Chemicals) |
| 18.40 | Laminar graphite (1) |
| 4.33 | Violet 2R (Sandoz) |
| 1.39 | Phthalo green (GF 349 Sanyo) |
| 100.00 | |

p/b = 0.177
face = smokey gray green
flash = turquoise
flop = smokey gray violet

## EXAMPLE 4 (Gray Gold)

| Parts | Ingredients |
|---|---|
| 0.56 | Phthalo Blue (X 3485, Ciba Geigy) |
| 63.48 | Laminar graphite (1) |
| 4.88 | Micro TiO2 (MT100S, Dainichseika) |
| 31.08 | Gold Mica (9-205, E.M. Chemicals) |
| 100.00 | |

p/b = 0.275
face = khaki
flash = green gold
flop = smokey blue gray

## EXAMPLE 5 (Olive)

| Parts | Ingredients |
|---|---|
| 55.67 | Green mica (9-444, E.M. Chemicals) |
| 15.78 | Red mica (9-507, E.M. Chemicals) |
| 28.55 | Laminar graphite (1) |
| 100.00 | |

p/b = 0.197
face = smokey olive
flash = smokey forest
flop = smokey gray red

8

## EXAMPLE 6 (Endive Green)

| Parts | Ingredients |
|---|---|
| 48.79 | Brass mica (2329, Mearl Corp.) |
| 20.33 | Green mica (839X, Mearl Corp.) |
| 19.03 | Green gold (YT714D, E.I. duPont) |
| 8.53 | Laminar graphite (1) |
| 3.32 | Phthalo green (264-8142, Sun Chem.) |
| 100.00 | |

p/b = 0.138
face = rich yellow green
flash = rich yellow green
flop = pine green

## EXAMPLE 7 (Terra Cotta)

| Parts | Ingredients |
|---|---|
| 0.48 | Aluminum (SS6246, Silberline) |
| 37.14 | Orange mica (3339X, Mearl Corp.) |
| 16.06 | Brass mica (2329, Mearl Corp.) |
| 19.92 | Micro TiO2 (MT100S, Tayco) |
| 16.06 | Perylene (R6436, Mobay) |
| 3.82 | Laminar graphite |
| 6.52 | Irgazin yellow (2GLT, Ciba-Geigy) |
| 100.00 | |

p/b = 0.259
face = rich clay tone
flash = cinnamon
flop = smokey ginger

## EXAMPLE 8 (Cocoa Brown)

| Parts | Ingredients |
|---|---|
| 37.18 | Red mica (9-507, E.M. Chemicals) |
| 8.53 | Laminar graphite |
| 26.38 | Irgazin orange (2RLT, Ciba-Geigy) |
| 12.40 | Perylene (R6436, Mobay) |
| 15.51 | Green mica (9-444, E.M. Chemicals) |
| 100.00 | |

p/b = 0.149
face = rich cocoa
flash = smokey green brown
flop = clean brown

## EXAMPLE 9 (Eggplant)

| Parts | Ingredients |
|---|---|
| 61.39 | Orange mica (3339X, Mearl) |
| 16.86 | Carbazole violet (B4018, Mobay) |
| 21.75 | Laminar graphite |
| 100.00 | |

p/b = 0.123
face = eggplant
flash = smokey umber
flop = smokey deep purple

## EXAMPLE 10 (Smokey Coffee)

| Parts | Ingredients |
|---|---|
| 51.14 | Red mica (9-507, E.M. Chemicals) |
| 38.86 | Perylene (R6436, Mobay) |
| 7.08 | Laminar graphite |
| 2.92 | Violet (2R, Sandoz) |
| 100.00 | |

p/b = 0.214
face = smokey slate
flash = smokey eggplant
flop = clean maroon

## EXAMPLE 11 (Purple)

| Parts | Ingredients |
|---|---|
| 92.36 | laminar graphite |
| 1.23 | carbazole violet (14-4008, Hoechst) |
| 6.41 | red mica (9-505, E.M. Chemicals) |
| 100.00 | |

p/b = 0.16
face = eggplant
flash = smokey iris
flop = smokey gunmetal

The following is an example of a vehicle composition in which laminar graphite may be incorporated with other pigments to achieve a spooky and/or antique metallic effect.

### Basecoat - acrylic high solids

| Parts | Ingredients |
|---|---|
| 15.0 - 20.0 | microgel (BASF) |
| 35.0 - 40.0 | Resimene X755 (Monsanto) |
| 50.0 - 40.0 | Acrylic Resin (BASF) |
| 100.0 | |

Additional ingredients such as acid catalysts and U.V. absorbers may be added. For example, didodecyl benzene sulfonic acid (DDBSA) (King Industries), 0.5-2.5% on S.V. and Tinuvin 328, Ciba Geigy; 30% in xylene, 0.5% to 3.0% on S.V. may be incorporated into the vehicle.

### Clearcoat - acrylic high solids

| Parts | Ingredients |
|---|---|
| 34.62 | Resimene X755 (Monsanto) |
| 29.13 | Acrylic resin (BASF) |
| 27.45 | Acrylic resin (BASF) |
| 4.00 | Acrylic resin (BASF) |
| 1.50 | U.V. Absorber (Tinuvin 1130, Ciba Geigy) |
| 1.10 | U.V. Absorber (Tinuvin 900, Ciba Geigy) |
| 0.95 | Acid Catalyst (XP-243, King Ind.) |
| 0.90 | U.V. Absorber (Tinuvin 440, Ciba Geigy) |
| 0.35 | Polybutyl acrylate DuPont (CH5967) |
| 100.00 | |

The basecoat and clearcoat formulations are blended in accordance with the general teachings above. The pigment blends of examples 1 to 11 are incorporated into the basecoat formulation above, and the basecoat and clearcoat are applied.

In one method of application, a 0.5 to 1.2 mil (dry film) basecoat is applied, air dried at ambient temperature for 3 to 10 minutes, cured at 270°F for 30 minutes, and allowed to cool to ambient temperature. A 2.0 0.2 mil (dry film) clearcoat is then applied to the cured basecoat, allowed to air dry for from 5 to 20 minutes and cured at 270°F for 30 minutes.

Alternatively, the clearcoat can be applied to the air dried (but uncured) basecoat. Both coats are then air dried at ambient temperature for from 5 to 25 minutes and cured at 270'F for thirty minutes.

The coating compositions described above were subjected to testing for stability to heat and humidity (10 days at 100% relative humidity and 100°F), durability (3-60 months outdoor exposure in Florida, and storage stability (as wet paint). The addition of laminar graphite did not degrade the stability of the coating compositions. Increased structural strength and resistance to ultraviolet absorbtion were observed.

While certain preferred embodiments of the invention have been described herein in detail, numerous alternative embodiments will be apparent to those skilled in the art from the teachings herein. Consequently the scope of the claims is not to be limited thereby.

## Claims

1. A pigment blend for use in a coating composition comprising an essentially transparent pigment or a pearlescent pigment in combination with an effective amount of a laminar graphite to cause a hue shift in the coating composition without substantially reducing the chromaticity.

2. The pigment blend of claim 1 wherein the initial true color of the essentially transparent or pearlescent pigment contained in the pigment blend is substantially retained in the coating composition.

3. A coating composition containing a pigment blend of an essentially transparent organic pigment or a pearlescent pigment in combination with a metal or mica, and a laminar graphite present in an amount effective for shifting the hue of the coating composition to an antique metallic effect while substantially retaining the initial true color of the essentially transparent organic or pearlescent pigment.

4. The coating composition of claim 2 wherein the pigment blend further contains metallic particles.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN vol. 12, no. 191 (C-501)(3038) 03 June 1988, & JP-A-62 294468 (KANSAI PAINT CO LTD) 21 December 1987, * the whole document * | 1-4 | C 09 D 5/36 B 05 D 5/06 |

| TECHNICAL FIELDS SEARCHED (Int. Cl.5) |
|---|
| C 09 D B 05 D |

The present search report has been drawn up for all claims

| Place of search | Date of completion of search | Examiner |
|---|---|---|
| The Hague | 08 May 91 | BUSCAGLIONE Y. |